# FASCICULE DE BREVET EUROPEEN

(11) **EP 0 728 154 B1**
(45) Date de publication et mention de la délivrance du brevet: **06.10.1999**
(21) Numéro de dépôt: 95900805.3
(22) Date de dépôt: 07.11.1994
(51) Int. Cl.: C08F 265/04, C09D 133/06, C09D 151/00

(54) **DISPERSION AQUEUSE DE POLYMERE, SON PROCEDE DE FABRICATION ET SON APPLICATION A LA FORMULATION DE PEINTURES**
WAESSRIGE POLYMERDISPERSION, VERFAHREN ZU SEINER HERSTELLUNG UND SEINE VERWENDUNG ZUR LACKFORMULIERUNG
AQUEOUS POLYMER DISPERSION, METHOD FOR MAKING SAME, AND USE THEREOF FOR PREPARING PAINTS

(30) Priorité: 10.11.1993 FR 9313552
(43) Date de publication de la demande: 28.08.1996
(73) Titulaire: CRAY VALLEY SA, 92800 Puteaux (FR)
(72) Inventeur: GUERIN, Patrick, Schooner Way, Cardiff CF1 5DZ (GB)
(74) Mandataire: Chaillot, Geneviève
(86) Numéro de dépôt international: FR9401294
(87) Numéro de publication internationale: WO9513309

(56) Documents cités:
- EP-A- 0 429 207
- US-A- 4 868 016

## Description

La présente invention se rapporte à une dispersion aqueuse de polymère à particules structurées destinée en particulier à la fabrication de peintures sans solvant, à un procédé pour sa fabrication et à son application à des formulations de peintures sans solvant.

Des compositions de peintures à base de latex contenant des pigments opacifiants tels que le dioxyde de titane et des pigments non-opacifiants sont connues depuis longtemps. Lorsqu'une émulsion aqueuse de polymère est appliquée à un substrat et après que l'eau se soit évaporée, il apparaît un film à la surface dudit substrat en raison de la coalescence du polymère présent dans l'émulsion.

En vue d'obtenir un film homogène, les forces de coalescence doivent dépasser la résistance des particules de polymère à la déformation et à la viscoélasticité. Le caractère viscoélastique des particules de polymère est par conséquent le principal trait qui détermine les tendances à la filmification du latex.

Il est bien connu d'utiliser un plastifiant pour modifier la viscoélasticité d'un latex polymère. Les plastifiants peuvent être des solides à faible point de fusion (par exemple le dibutyl- ou le dioctylphtalate) ou bien des solvants à haut point d'ébullition. De manière générale, ils accroissent l'élongation et l'élasticité mais réduisent la force de rupture de la résine dans laquelle ils sont incorporés. Bien qu'ils soient moins volatiles que les solvants, ils possèdent néanmoins une odeur caractéristique.

Il est également connu d'utiliser des solvants (par exemple du type glycol), parfois dénommés agents de coalescence, en vue de modifier la nature viscoélastique du polymère. Ce sont des plastifiants fugitifs en ceci qu'ils facilitent la déformation élastique des particules du latex.

L'emploi de plastifiants et d'agents de coalescence dans les films de latex a pour conséquence un plus grand degré de coalescence dans une gamme étendue de températures, et l'on a pensé jusqu'ici que leur présence était essentielle à la bonne formation du film.

Il est par ailleurs connu de répertorier les peintures d'après leur brillance, mesurée par réflexion de la lumière à un angle donné par exemple selon la norme DIN 53778, (partie 1), en :
- peintures mates : réflexion supérieure à 7 % mais inférieure à 45 % sous un angle de 85°.
- peintures semi-mates : réflexion supérieure à 45 % sous un angle de 85°.
- peintures semi-brillantes : réflexion supérieure à 31 % mais inférieure à 62 % sous un angle de 60°.

Les propriétés que l'on attend d'une peinture sont une bonne applicabilité, un bon pouvoir liant, l'absence de craquelures même à basse température (5°C), l'absence de caractère collant ou poisseux, une bonne résistance à l'abrasion humide (lessivabilité) et enfin un degré de réflexion de la lumière adapté à l'une ou l'autre des catégories ci-dessus. Selon son appartenance à l'une ou l'autre de ces catégories, la concentration pigmentaire en volume de la peinture est très différente : de 70 % à 95 % environ pour une peinture mate, de 20 % à 40 % environ seulement pour une peinture semi-brillante. De même la lessivabilité est une propriété aisément obtenue dans les peintures semi-mates et semi-brillantes, en raison de la proportion importante de latex dans celles-ci. Par contre dans les peintures mates ne comprenant le plus souvent que de 10 % à 15 % environ en poids de latex polymère, une lessivabilité satisfaisante ne peut être obtenue que par une sélection soigneuse de la nature du latex polymère.

Par ailleurs il est bien connu que l'industrie des peintures engendre un certain nombre de problèmes écologiques et de respect de l'environnement résultant de la composition chimique de la peinture et en particulier de la présence dans cette composition de matières organiques volatiles telles que les agents de coalescence.

Ces problèmes sont notamment ceux impliqués par la toxicité de ces substances organiques au moment de la fabrication et de l'application de la peinture, et par la destruction de la couche d'ozone de l'atmosphère lorsque ces substances s'évaporent pendant l'application.

Des dispersions aqueuses de polymères comprenant des particules non-homogènes ou structurées obtenues en général par la technique de surpolymérisation procédant en au moins deux étapes de polymérisation, sont bien connues. Des exemples de telles particules structurées, de morphologies variées, ont été décrits par J.C. DANIEL dans Makromol. Chem., Suppl. 10/11, pages 359 à 390 (1985) et sont désignées notamment sous les appellations noyau-enveloppe ou coeur-coquille ("core-shell" en anglais), multicouches, cellulaires, Poow ou encore particules à gradient de composition. D'autres exemples de particules structurées de morphologie "octopus ocellatus" ont été décrits par M. OKUBO, K. KANAIDA et T. MATSUMOTO dans Colloid and Polymer Science, vol. 265 n° 10 (1987), pages 876 à 881.

Ainsi le brevet US-A-4.107.120 décrit une émulsion de particules de polymère acrylique à structure "core-shell" dont le noyau est réticulé, possède une température de transition vitreuse inférieure à -20°C et représente de 30 % à 60 % environ en poids de la particule et dont l'enveloppe, également réticulée, possède une température de transition vitreuse de -10° à + 60°C environ. Le brevet EP-B-151.360 décrit une dispersion aqueuse de particules de polymère constitué d'un interpolymère de (A) 95 % à 99 % en poids d'au moins un (méth)acrylate d'alkyle dont le groupe alkyle a de 1 à 8 atomes de carbone, et (B) de 1 à 5 % en poids d'au moins un monomère hydrosoluble copolymérisable avec le(s) monomères(s) (A), lesdites particules ayant une structure composite comprenant un noyau et une enveloppe, dispersion caractérisée en ce que l'enveloppe contient de 50 à 90 % en moles de(s) monomères(s) hydrosoluble(s) de la dispersion et en ce que ladite dispersion est susceptible d'être obtenue par un procédé comprenant une première étape de polymérisation en émulsion dans l'eau de(s) monomère(s) (A) et une seconde étape consistant à introduire dans le réacteur, lorsque le taux d'avancement de la réaction de polymérisation a atteint une valeur au moins égale à 82 %, un mélange comprenant de 12 à 45 % en poids d'au moins un monomère hydrosoluble (B) et de 55 à 88 % en poids de monomères (A).

Le brevet US-A-5.185.387 décrit une dispersion aqueuse de résine synthétique ayant une température de filmification inférieure à 50°C, contenant une émulsion de polymère à structure composite comprenant un noyau et une enveloppe constitué de :
A) 65 à 90 % en poids d'un polymère (noyau) faiblement réticulé ayant une température de transition vitreuse inférieure à 0°C et un allongement à la rupture d'au moins 150 %, ledit noyau comprenant:
   1) au moins un monomère polymérisable par radicaux libres (mono)-éthyléniquement insaturé dont l'homopolymère possède une température de transition vitreuse inférieure à 25°C, et
   2) 0,1 à 2,0 % en poids dudit noyau, d'au moins un monomère réticulant contenant au moins deux groupes éthyléniquement insaturés non conjugués, polymérisables par radicaux libres, et
B) 10 à 35 % en poids d'un polymère (enveloppe) essentiellement non réticulé, ayant une température de transition vitreuse inférieure à 60°C, comprenant :
   1) au moins un monomère polymérisable par radicaux libres, éthyléniquement insaturé, dont l'homopolymère possède une température de transition vitreuse inférieure à 25°C, et
   2) au moins un monomère polymérisable par radicaux libres, mono-éthyléniquement insaturé, dont l'homopolymère possède une température de transition vitreuse supérieure à 25°C, et
   la température de transition vitreuse du noyau étant inférieure d'au moins 10°C à celle de l'enveloppe, laquelle contient jusqu'à 20 % en poids de monomères choisis parmi l'acide acrylique, l'acide méthacrylique, et leurs esters d'hydroxyalkyle, l'acrylamide, le méthacrylamide et leurs dérivés N-alkylés.

La demande de brevet EP-A-522.789 décrit un liant polymère en émulsion comprenant au moins un premier polymère et au moins un second polymère mutuellement incompatibles, dans lequel le premier polymère a une température de transition vitreuse de -30° à -60°C environ et représente de 70 % à 95 % environ en poids du liant et dans lequel le second polymère a une température de transition vitreuse de 0° à 60°C environ. De préférence la température de transition vitreuse du second polymère (enveloppe) est supérieure d'au moins 40°C environ à celle du premier polymère (noyau).

Le brevet US-A-4.868.016 décrit une composition formée en combinant au moins un latex de polymère thermoplastique substantiellement insoluble dans un milieu alcalin aqueux avec au moins un polymère alcalino-soluble et incompatible avec ledit latex de polymère thermoplastique, dans un rapport en poids du latex thermoplastique au polymère alcalino-soluble compris entre environ 20 : 80 et environ 99 : 1. De préférence le latex thermoplastique possède une température de transition vitreuse inférieure à -10°C et le polymère alcalino-soluble possède une température de transition vitreuse supérieure à 30°C. Le polymère alcalino-soluble comprend de préférence 10 % à 60 % en poids d'un monomère acide (tel qu'acide (méth)acrylique), tandis que le latex thermoplastique comprend de préférence moins de 3 % en poids d'un tel monomère acide. La composition décrite par ce document est utile en tant qu'adhésif car elle devient poisseuse au toucher lorsqu'on élève sa température.

Le document EP-A-429.207 décrit, en tant que primaire pour le revêtement du bois, du verre, des plastiques et de l'aluminium, une composition comprenant une dispersion aqueuse de particules comprenant au moins deux copolymères mutuellement incompatibles formant une phase externe et une phase interne et dont la taille moyenne est de 20 à 70 nm. Des monomères réticulants peuvent être présents. De préférence la Tg de la phase externe est plus basse que celle de la phase interne, de préférence inférieure à 35°C pour l'une et supérieure à 45°C environ pour l'autre.

Toutefois à ce jour aucune dispersion aqueuse de polymère - dont les documents ci-dessus illustrent quelques exemples - n'a permis de se passer d'agents de coalescence de manière à résoudre les problèmes d'environnement évoqués précédemment.

La présente invention vise à remplir plusieurs objectifs et notamment à résoudre les problèmes écologiques évoqués ci-dessus en supprimant totalement les agents de coalescence de la composition des peintures aqueuses. Elle vise en second lieu à atteindre le premier objectif sans nuire à l'ensemble des propriétés exigées de la peinture. Elle vise également à définir un liant polymère qui soit adapté à des peintures mates, satinées et semi-brillantes, tout en procurant particulièrement aux peintures mates (contenant peu de liant) une lessivabilité améliorée.

Pour atteindre ces différents objectifs, un premier objet de la présente invention consiste en une dispersion aqueuse de particules de polymère comprenant au moins un premier polymère et au moins un second polymère mutuellement incompatibles, caractérisée en ce que le premier polymère est non-réticulé, possède une température de transition vitreuse de -25° à + 0°C environ et représente de 40 à 65 % environ en poids des particules, le second polymère est non alcalino-soluble et non-réticulé, possède une température de transition vitreuse de + 5° à 40°C environ et représente de 60 % à 35 % environ en poids des particules, en ce que la température de transition vitreuse du second polymère dépasse de moins de 40°C celle du premier polymère et en ce que la dimension moyenne des particules est comprise entre 100 et 300 nm.

Les deux polymères mutuellement incompatibles composant la dispersion aqueuse selon l'invention peuvent constituer n'importe quelle configuration morphologique de particules structurées telle que celles décrites par J.C. DANIEL dans Makromol. Chem., Suppl. 10/11, pages 359 à 390 (1985), et M. OKUBO, K. KANAIDA et T. MATSUMOTO dans Colloid and Polymer Science, vol. 265 n° 10 (1987), pages 876 à 881, c'est-à-dire :
- noyau-enveloppe, encore désignée coeur-coquille (ou "core-shell" en anglais).
- coeur-coquille à coeurs multiples.
- coeur-coquille dont la coquille entoure incomplètement le coeur.
- "octopus ocellatus".

L'incompatibilité mutuelle des deux polymères de la dispersion peut être déterminée par toute méthode connue dans la technique, notamment la microscopie électronique lorsque les deux polymères sont de nature différente.

Concernant le second polymère, par non alcalino-soluble on entend insoluble dans une solution alcaline aqueuse, ce qui implique que la proportion de monomère acide carboxylique dans ce polymère ne dépasse pas environ 8 % en poids.

Les températures de transition vitreuse des deux polymères de la dispersion, qui constituent des caractéristiques très importantes pour l'efficacité de la présente invention, peuvent être calculées en utilisant l'équation de Fox (T.G. FOX, Bull. Am. Physics Soc., vol. 1 (3), page 123 (1956) et sont généralement mesurées par la méthode de calorimétrie différentielle programmée.

Chacun des deux polymères mutuellement incompatibles composant la dispersion aqueuse selon l'invention est préparé par polymérisation d'au moins un monomère éthyléniquement insaturé en respectant une composition de monomère(s) qui permette d'atteindre la température de transition vitreuse souhaitée. Parmi les monomères éthyléniquement insaturés utilisables on peut citer d'une part des esters de l'acide acrylique ou de l'acide méthacrylique tels que de l'acrylate de méthyle, l'acrylate d'éthyle, l'acrylate de n-butyle, l'acrylate de 2-éthylhexyle, le méthacrylate de méthyle, le méthacrylate de n-butyle, et d'autre part des monomères vinylaromatiques comme le styrène et ses dérivés, par exemple l'alphaméthylstyrène, le vinyltoluène et le tertiobutylstyrène. Les monomères formant le premier polymère peuvent être identiques à ou différents de ceux formant le second polymère. On préfère particulièrement utiliser :
- pour former le noyau de la particule structurée (premier polymère), un mélange de 15 à 35 % environ en poids de styrène ou de méthacrylate de méthyle et de 65 à 85 % environ en poids d'acrylate de n-butyle.
- pour former l'enveloppe de la particule structurée (second polymère), un mélange de 40 à 70 % environ en poids de styrène et de 30 à 60 % environ en poids d'acrylate de n-butyle.

Chaque polymère composant la dispersion aqueuse selon l'invention, étant non alcalino-soluble peut en outre comprendre facultativement pas plus d'environ 8 parties en poids, en particulier jusqu'à 2 parties environ en poids d'au moins un comonomère hydrosoluble copolymérisable avec les monomères éthyléniquement insaturés pour 100 parties en poids desdits monomères. Comme comonomère hydrosoluble utilisable on peut citer notamment l'acide acrylique, l'acide méthacrylique, l'acrylamide et le méthacrylamide. Mais contrairement à l'enseignement du brevet EP-B-151.360, ce comonomère hydrosoluble n'a pas besoin d'être incorporé de manière sélective dans l'enveloppe de la particule structurée. Il peut simplement être présent dans le noyau et dans l'enveloppe dans des proportions sensiblement identiques.

Selon des modes de réalisation préférés de la présente invention :
- la température de transition vitreuse du premier polymère est comprise entre -25° et -5°C environ.
- la température de transition vitreuse du second polymère est comprise entre + 15° et + 35°C environ.
- la température de transition vitreuse du second polymère dépasse de plus de 20°C celle du premier polymère.

Les méthodes de mesure et de contrôle de la taille moyenne des particules sont bien connues de l'homme de l'art, par exemple par E.A. COLLINS, 18th Annual Short Course (Juin 1987) de l'Institut d'Emulsion des Polymères, Université Lehigh (Pennsylvanie), par E.A. COLLINS, J.A. DAVIDSON et C.A. DANIELS, J. Paint Technology 47, 35 (1975) et par les principes de fonctionnement de l'appareil AutoSizer Lo-C de MALVERN INSTRUMENTS.

Comme déjà précisé dans l'expression générale de la présente invention, il est essentiel que les deux polymères mutuellement incompatibles de la dispersion soient non-réticulés. Pour cette raison, aucun monomère multi-éthyléniquement insaturé ne devra être présent dans les compositions de monomères utilisées pour les constituer.

Un second objet de la présente invention consiste en un procédé de fabrication d'une dispersion aqueuse telle que celle selon l'invention comprenant une première étape de polymérisation en émulsion de monomères conduisant à la formation d'un premier polymère, suivie d'une seconde étape de polymérisation en émulsion de monomères conduisant à la formation d'un second polymère incompatible avec le premier, caractérisé en ce que :
- les monomères utilisés dans la première étape conduisent à la formation d'un premier polymère non-réticulé ayant une température de transition vitreuse de -25°C à + 0°C environ,
- les monomères utilisés dans la seconde étape conduisent à la formation d'un second polymère non alcalino-soluble et nonréticulé ayant une température de transition vitreuse de + 15°C à 40°C environ et dépassant de moins de 40°C la température de transition vitreuse du premier polymère,
- les quantités de monomères engagés dans la première étape et dans la seconde étape sont telles que le premier polymère représente de 30 % à 65 % environ en poids des particules de la dispersion tandis que le second polymère représente de 70 % à 35 % environ en poids des particules de la dispersion, et
- les conditions de polymérisation en émulsion de la première étape et de la seconde étape sont telles que la dimension moyenne des particules est comprise entre 100 et 300 nm.

Afin de conduire à la formation d'un premier polymère non-réticulé et d'un second polymère non-réticulé, les flux de monomères utilisés dans la première étape et respectivement dans la seconde étape du procédé selon l'invention ne contiennent aucun monomère réticulant tel qu'habituellement désigné dans cette technique, c'est-à-dire aucun monomère comprenant au moins deux groupes éthyléniquement insaturés polymérisables par radicaux libres.

Pour la préparation d'une dispersion aqueuse convenant à la formulation des peintures mates, telles que définies ci-dessus, il est en outre préférable que l'addition et la polymérisation des monomères dans la seconde étape commencent alors que la composition de monomères de la première étape n'est qu'au plus à 90 % de taux de conversion.

La nature des monomères utilisés dans la première étape et dans la seconde étape du procédé selon l'invention a déjà été précisé ci-dessus. Comme déjà indiqué, il est possible d'utiliser dans la première étape et dans la seconde étape du procédé jusqu'à 2 parties environ en poids d'un comonomère hydrosoluble copolymérisable avec les monomères principaux pour 100 parties en poids desdits monomères.

Le procédé selon l'invention peut être mis en oeuvre en présence de jusqu'à environ 1 partie en poids, pour 100 parties en poids des monomères, d'au moins un agent de transfert de chaîne afin de régler le poids moléculaire moyen en nombre du polymère résultant. Comme exemples de composés utilisables comme agents de transfert de chaîne dans la présente invention on peut citer des acides mercaptocarboxyliques ayant de 2 à 8 atomes de carbone et leurs esters tels que l'acide mercaptoacétique, les acides mercapto-2 et mercapto-3 propioniques, l'acide mercapto-2 benzoique, l'acide mercapto-succinique, l'acide mercaptoisophtalique et leurs esters d'alkyle. On préférera utiliser un acide mercaptomonocarboxylique et/ou un mercaptodicarboxylique ayant de 2 à 6 atomes de carbone, plus particulièrement un acide mercaptopropionique et ses esters d'alkyle, spécialement les esters d'isooctyle ou de n-dodécyle de l'acide mercaptopropionique.

Le flux principal des monomères éthyléniquement insaturés constituant chaque polymère de la dispersion peut être émulsifié au moyen d'au moins un agent tensio-actif de type anionique ou non-ionique ou être simplement introduit dans le réacteur sous forme d'un mélange homogène de monomères. Dans ce dernier cas, une solution aqueuse d'un ou plusieurs tensio-actifs pourra être additionnée simultanément. Il est préférable d'utiliser une combinaison de tensio-actif non-ionique et de tensio-actif anionique en vue de préparer les émulsions. Comme exemples de tensio-actifs non-ioniques on peut citer des polyethers tels que des condensats d'oxyde d'éthylène et d'oxyde de propylène, des ethers et thioethers d'alkyl et alkylaryl polyéthylène glycols et polypropylène glycols, des alkylphénoxypoly (éthylenoxy) ethanols, des dérivés polyoxyalkylène d'esters partiels d'acides gras à chaîne longue tels que les acides laurique, myristique, palmitique et oléique, des condensats d'oxyde d'éthylène avec des alkylmercaptans supérieurs, des dérivés d'oxyde d'éthylène d'acides carboxyliques à chaîne longue et d'alcools, etc. Ces tensio-actifs non-ioniques contiennent de préférence d'environ 5 à 100 motifs d'oxyde d'éthylène par molécule et encore plus préférentiellement d'environ 20 à 50 de telles unités. Comme tensio-actifs anioniques utilisables, de préférence en combinaison avec lesdits tensio-actifs non-ioniques on peut citer des sulfates et sulfonates de haut poids moléculaire, par exemple des alkyl-, aryl- et alkylarylsulfates et sulfonates de sodium et de potassium tels que le 2-ethylhexylsulfate de sodium, le 2-éthylhexylsulfate de potassium, le nonylsulfate de sodium, l'undécylsulfate de sodium, le tridécylsulfate de sodium, le pentadécyl-sulfate de sodium, le laurylsulfate de sodium, le méthylbenzènesulfonate de sodium, le méthyl-benzènesulfonate de potassium, le toluènesulfonate de potassium et le xylènesulfonate de sodium, les dérivés sulfonés des tensio-actifs non-ioniques énumérés ci-dessus, des dialkyl esters de sels alcalins d'acide sulfosuccinique, tels que le diamylsulfosuccinate de sodium, des produits de condensation formaldéhyde/acide naphtalènesulfonique et des sels d'ammonium ou de métal alcalin (par exemple sodium ou potassium) d'esters d'acide phosphorique et d'alkyl phénol ou d'alkyl alcoxylés, de préférence éthoxylés, ayant de 2 à 50 groupes alcoxyle par molécule. La quantité totale de tensio-actifs utilisée dans le procédé de polymérisation en émulsion de la présente invention varie d'environ 2 à 20 % en poids, de préférence environ 4 à 12 % en poids, des composants monomériques. Le rapport en poids du tensio-actif anionique au tensio-actif non-ionique devrait être compris entre 0,01 et 1 environ, de préférence entre environ 0,05 et 0,5. La quantité d'eau utilisée dans le milieu réactionnel est en général déterminée par le taux de solides désiré dans la dispersion aqueuse selon l'invention, qui se situe en général entre environ 40 % et 70 %, de préférence entre 45 et 60 % en poids.

Les composants monomériques de la dispersion selon l'invention sont polymérisés au moyen de quantités efficaces, de préférence entre 0,1 et 2 % environ en poids de la charge totale de monomères, d'au moins un initiateur de radicaux libres conventionnel. Un tel initiateur est de préférence substantiellement hydrosoluble. De tels initiateurs comprennent des peroxydes minéraux, tels que le peroxyde d'hydrogène, des persulfates et perborates de métal alcalin et des systèmes redox tels que des combinaisons d'un persulfate, perborate ou perchlorate d'ammonium ou de métal alcalin avec un bisulfite de métal alcalin.

La température de polymérisation requise pour produire les polymères aqueux de la présente invention dans chacune des deux étapes du procédé se situe généralement dans une gamme d'environ 40 à 95°C - de préférence d'environ 55 à 85°C - en fonction de la durée prévue pour la polymérisation. La durée de polymérisation se situe généralement d'environ 45 minutes à 6 heures pour chacune des deux étapes, cette durée devenant plus élevée lorsque la température de polymérisation devient plus basse.

En vue d'atteindre un taux final de conversion de la réaction de polymérisation de 100 %, il peut être souhaitable de faire suivre la seconde étape par une cuisson de l'émulsion polymère aqueuse pendant environ 30 à 90 minutes à une température supérieure, de préférence d'au moins 8°C, à la température de polymérisation.

Une amélioration complémentaire de la présente invention réside dans le traitement de l'émulsion polymère aqueuse après la seconde étape ou le cas échéant, après l'étape de cuisson, au moyen d'un système d'initiation de radicaux libres ayant un temps de demi-vie court à la température considérée en vue d'atteindre un taux de conversion global proche de 100 % et/ou un taux résiduel de monomères ne dépassant pas environ 50 ppm. Comme exemples de systèmes initiateurs de radicaux libres on peut citer des peroxydes organiques et minéraux tels que l'hydroperoxyde de tertiobutyle, le peroxyde de butyle, le peroxyde d'hydrogène ou des persulfates de métal alcalin, en combinaison avec un agent réducteur tel que le formaldéhydesulfoxylate de sodium, l'acide ascorbique, le sel de Mohr, etc. Un tel traitement peut être effectué à des températures de 40°C à 90°C environ, sa durée dépendant de la température choisie et étant de préférence comprise entre 15 minutes et 3 heures environ.

Lorsque le latex préparé en conformité avec la présente invention paraitra trop acide pour entrer dans la formulation de peintures, il pourra être souhaitable d'ajouter son pH à une valeur supérieure à 7, par exemple au moyen de toute matière alcaline telle que les hydroxydes de sodium, potassium ou ammonium.

La première étape du procédé selon l'invention peut être ensemencée, c'est-à-dire initiée en présence d'une émulsion préformée de particules de petite taille, ou bien non-ensemencée. La polymérisation ensemencée est préférée et permet d'obtenir des dispersions de polymère possédant des tailles de particules plus uniformes que la polymérisation non-ensemencée. Plus particulièrement on a découvert selon la présente invention qu'une amélioration très significative de la lessivabilité de peintures mates, telles que définies ci-dessus, peut être obtenue en effectuant un ensemencement dans la première étape du procédé tel que environ 80 à 98 % en poids des monomères utilisés dans la première étape sont ajoutés dans un milieu réactionnel contenant déjà une pré-émulsion partiellement polymérisée d'environ 2 à 20 % en poids desdits monomères et en ce que la taille moyenne des particules de polymères présentes dans ladite pré-émulsion partiellement polymérisée ne dépasse pas environ 95 nanomètres (nm), et de manière préférée 65 nm. Outre les méthodes de mesure de tailles de particules déjà évoquées précédemment, l'homme de l'art peut également contrôler que la taille moyenne des particules de polymère présentes dans la pré-émulsion partiellement polymérisée n'excède pas 95 nm soit par la durée de polymérisation dudit flux partiel (environ 5 à 20 % en poids de la totalité des composants monomériques) de pré-émulsion, qui devra de préférence ne pas dépasser environ 45 minutes ou bien par le taux global de conversion des monomères dans ledit flux partiel de pré-émulsion, qui doit atteindre au moins 50 % et de préférence au moins 90 % en poids.

Un autre objet de la présente invention consiste en une peinture sans plastifiant et sans agent de coalescence comprenant une émulsion aqueuse de polymère du type décrit ci-dessus.

La méthode de formulation utilisée peut être l'une quelconque de celles connues jusqu'ici dans la technique de formulation des peintures au latex. Essentiellement, les peintures aqueuses selon l'invention comprennent un mélange de matière pigmentée et de latex. La matière pigmentaire est de préférence utilisée sous une forme convenablement réduite en poudre par des moyens conventionnels, ainsi que tous les autres adjuvants solides optionnels décrits ci-après.

Pour combiner les ingrédients de peinture afin de formuler la peinture au latex de la présente invention, un ou plusieurs pigments primaires et éventuellement d'autres adjuvants (qui eux-mêmes peuvent être liquides ou solides) peuvent être incorporés au liant latex pour former un mélange uniforme simplement en ajoutant toutes les matières premières dans un récipient agité. Bien qu'il soit possible de combiner les pigments et autres avec l'émulsion et de broyer ou piler le mélange dans un broyeur-disperseur, il est souhaitable de préparer d'abord une pâte aqueuse de pigment et d'adjuvants, de préférence avec l'aide d'un agent dispersant, dans un dispositif à haut gradient de cisaillement puis de combiner la pâte obtenue avec le latex. La consistance de la pâte peut être contrôlée par les quantités respectives d'eau, de pigments et d'adjuvants utilisés.

Pour formuler les peintures aqueuses de la présente invention, peuvent être utilisées :
- des matières de charges, se présentant sous forme pulvérulente telles que carbonate de calcium, dolomie, talc, mica, sulfate de baryum, chaux, ciment, et toutes matières de charge utilisées habituellement dans les peintures.
- des matières pigmentaires telles que oxyde de titane, noir de carbone, la phtalocyanine de cuivre, l'oxyde de zinc, les oxydes de fer, l'oxyde de chrome, et toute autre matière pigmentaire utilisée habituellement dans les peintures.

La proportion de matière pigmentaire utilisée pour formuler une peinture aqueuse selon la présente invention est déterminée par un certain nombre de facteurs, comprenant la profondeur de couleur désirée, le pouvoir couvrant, etc. En général, les peintures aqueuses de la présente invention possèdent des concentrations pigmentaires en volume dans une gamme d'environ 20 % à 95 %, selon la catégorie de peinture concernée : par exemple d'environ 70 à 95 % pour les peintures mates et d'environ 20 à 40 % pour les peintures semi-brillantes.

En complément des pigments et charges, un ou plusieurs adjuvants peuvent, si désiré, être inclus dans la formulation des peintures aqueuses de la présente invention. De tels ingrédients comprennent (mais ne se limitent pas à) :
- des dispersants, aussi dénommés défloculants, c'est-à-dire des composés capables d'amplifier la formation de charges électriques de même signe à la surface des particules de polymère et par conséquent de promouvoir la création de forces répulsives de nature électrique entre ces particules, tels que des silicates (en particulier des métasilicates) de métal alcalin, des polyphosphates de métal alcalin et des sels de métal alcalin de polyacides organiques (en particulier des polyacrylates) ;
- des agents mouillants, c'est-à-dire des composés capables de modifier la tension de surface du milieu, comprenant généralement des groupes de nature hydrophile et hydrophobe. Ils peuvent inclure des agents tensio-actifs anioniques (par exemple des alkylarylsulfonates de métal alcalin), cationiques (par exemple des sels d'ammonium quaternaires) ou non-ioniques (par exemple des polyétheroxydes) ;
- des modificateurs de rhéologie ou épaississants tels que des polymères hydrosolubles modifiés par des groupes hydrophobes (par exemple éthoxylate d'uréthane modifié de manière hydrophobique) et des dérivés d'hydroxyalkyl cellulose ;
- des bases minérales, c'est-à-dire par exemple l'ammoniaque, l'hydroxyde de sodium ou de potassium ;
- des agents anti-moussants tels qu'un mélange d'huile minérale et d'émulsifiant non-ionique ;
- des biocides, c'est-à-dire des composés capables de détruire les microorganismes, tels que des dérivés de chloroallyle ou d'isothiazolone ;
- des anticorrosifs tels qu'une solution aqueuse de benzoate de sodium et/ou de nitrite de sodium ;
- des insecticides, pesticides, fongicides et acaricides, tels que des composés pyréthrinoides (par exemple la décaméthrine ou la dieldrine), le lindane, des composés N-hétérocycliques, des composés uracyles, des dérivés de triazole, des composés organophosphorés, etc.

Le choix des adjuvants particuliers et leurs quantités respectives sont généralement dictés par les propriétés désirées pour une peinture aqueuse particulière et sont à la portée de l'homme de l'art. En général cependant, les peintures au latex de la présente invention possèdent un taux de matières solides global compris entre environ 40 et 70 % en poids.

Les peintures aqueuses de la présente invention peuvent être appliquées à la surface d'un mur ou à tout autre substrat par tout moyen conventionnel, par exemple brosse, rouleau, pistolet, etc. La peinture peut être réticulée ou séchée après application sur le substrat, également par des moyens conventionnels, par exemple séchage à l'air, cuisson, etc. Le revêtement peinture, réticulé ou non, possède d'excellentes performances en ce qui concerne la résistance au jaunissement, l'absence de craquelures à basse température et de caractère collant ou poisseux, et la coalescence à basse température. En outre, les surfaces revêtues au moyen des peintures au latex selon la présente invention se comportent bien à l'égard du rapport de contraste (c'est-à-dire le pouvoir couvrant).

Ces propriétés sont plus amplement illustrées dans les exemples suivants, présentés dans le but d'illustrer, mais non pas limiter, la présente invention. Sauf exception, toutes les quantités sont exprimées en poids.

### EXEMPLES 1 à 6

Une première émulsion est préparée à température ambiante (23°C) en ajoutant les ingrédients suivants dans un récipient équipé d'un agitateur dans l'ordre suivant :

| | |
|---|---|
| Eau déminéralisée | 32 parties |
| Tensio-actif anionique commercialisé par SCHERING sous la marque REWOPOL NOS 25 (35 % actif) | 0,75 partie |
| Tensio-actif non-ionique commercialisé par SCHERING sous la marque REWOPOL HV 25 (80 % actif) | 3,6 parties |
| Acrylamide | 0,2 partie |
| Acide acrylique | 1 partie |
| Acrylate de n-butyle | x parties |
| Styrène | y parties |
| n-dodécylmercaptan | 0,02 partie |

Dans le réacteur est chargé 5 % en poids de la première émulsion, 38 parties d'eau déminéralisée et 0,3 partie de REWOPOL NOS 25. Le réacteur est alors chauffé à 72°C puis maintenu à cette température. Dans le réacteur on ajoute alors une solution de métabisulfite (0,1 partie de métabisulfite de sodium dans 0,5 partie d'eau déminéralisée) et une solution d'initiateur (0,035 partie de persulfate d'ammonium dans 0,5 partie d'eau déminéralisée). La polymérisation est alors poursuivie pendant 15 minutes. A la semence ainsi obtenue on ajoute, pendant une durée supplémentaire de 2 heures, simultanément et progressivement dans le réacteur maintenu à la température de 72°C :
- les 95 % en poids restants de la première émulsion, et
- une solution d'initiateur (0,315 partie de persulfate d'ammonium dans 10 parties d'eau déminéralisée).

Pendant cette première étape de polymérisation, on prépare par ailleurs à température ambiante (23°C) une seconde émulsion en ajoutant les ingrédients suivants dans un récipient équipé d'un agitateur dans l'ordre suivant :

| | |
|---|---|
| Eau déminéralisée | 20 parties |
| REWOPOL HV 25 | 2,8 parties |
| Acrylamide | 0,3 partie |
| Acide acrylique | 1,5 partie |
| Acrylate de n-butyle | w parties |
| Styrène | z parties |
| n-dodécylmercaptan | 0,1 partie |

A l'issue de la première étape de polymérisation, on ajoute dans le réacteur d'une part la seconde émulsion et d'autre part une solution d'initiateur (0,315 partie de persulfate d'ammonium dans 10 parties d'eau déminéralisée). Cette addition dure 90 minutes, à l'issue de laquelle la température est encore maintenue à 72°C pendant 15 minutes supplémentaires, puis on effectue une cuisson à 80°C pendant une heure. Le latex est ensuite refroidi à 60°C puis traité en lui ajoutant :
- d'abord une solution de 0,315 partie de peroxyde d'hydrogène (100 % actif) dans 2,3 parties d'eau déminéralisée.
- puis une solution de 0,015 partie de sel de Mohr et de 0,315 partie d'acide ascorbique dans 1,7 partie d'eau déminéralisée, que l'on ajoute pendant une heure.

Le latex est ensuite refroidi jusqu'à 30°C puis on lui ajoute pendant une heure une solution aqueuse d'hydroxyde de sodium à 10%.

En faisant varier d'une part les valeurs de x, y, w et z, et d'autre part le taux de conversion τ (exprimé en % pondéral) des monomères à l'issue de la première étape, on obtient différents latex dont les caractéristiques suivantes sont indiquées dans le tableau I:
- taux de matières solides TMS, exprimé en pourcentage.
- taille moyenne des particules TMP, déterminée au moyen d'un appareil AutoSizer Lo-C de MALVERN INSTRUMENTS et exprimée en nanomètre.
- viscosité Brookfield VB à 100 tours/minutes, exprimée en Pa.s.
- taux de monomères résiduels TMR, exprimé en ppm.
- température minimale de filmification TMF exprimée en °C.
- pH.
- températures de transition vitreuse du coeur Tg1, et de la coquille Tg2, exprimées en °C et déterminées par calorimétrie différentielle programmée.

**Tableau I**

| Exemple | 1 | 2 | 3 | 4 | 5 | 6 |
|---|---|---|---|---|---|---|
| τ | 83 | 83 | 83 | 89 | 95 | 99 |
| x | 25,8 | 37 | 40,8 | 37 | 37 | 37 |
| y | 8,2 | 11,8 | 13 | 11,8 | 11,8 | 11,8 |
| w | 21 | 16,7 | 15 | 16,7 | 16,7 | 16,7 |
| z | 42 | 31,5 | 28,2 | 31,5 | 31,5 | 31,5 |
| TMS | 49,1 | 48,7 | 48,8 | 48 | 48,2 | 48,9 |
| TMP | 122 | 116 | 125 | 116 | 117 | 120 |
| VB | 0,25 | 0,3 | 0,35 | 0,27 | 0,3 | 0,31 |
| TMR | 30 | 20 | 26 | 20 | 32 | 26 |
| TMF | 0 | 0 | 0 | 0 | 0 | 0 |
| pH | 8,5 | 8,7 | 8,5 | 8,5 | 8,7 | 8,5 |
| Tg1 | -12 | -12 | -12 | -11 | -12 | -12 |
| Tg2 | 22 | 22 | 21 | 24 | 28 | 33 |

Les examples 1 et 6 sont comparatifs.

### EXEMPLES 7 à 12

Certaines dispersions aqueuses de polymère des exemples précédents ont été formulées dans des compositions de peinture mate comprenant :
- Eau 270 parties
- agent mouillant commercialisé par BENKISER sous la marque LOPON 890 3 parties
- biocide commercialisé par RIEDEL DE HAEN sous la marque MERGAL K 10 1 partie
- agent mouillant et dispersant commercialisé par MUNZING sous la marque AGITAN 281 2 parties
- agent épaississant (modificateur de rhéologie) commercialisé par HOECHST sous la marque MHB 6000 Y 4,5 parties
- oxyde de titane commercialisé par SACHTLEBEN sous la marque HOMBITAN R 611 50 parties
- carbonate de calcium commercialisé par DEUTSCHE SOLVAY sous la marque SOCAL P 2 160 parties
- craie (qualité industrielle) 250 parties
- carbonate de calcium commercialisé par OMYA sous la marque CALCIDAR BL 110 parties
- silice commercialisée par LANGER sous la marque DICALITA WB 5 10 parties
- solution aqueuse de soude à 25 % 2 parties
- émulsion aqueuse de polymère 117,6 parties

La lessivabilité de ces peintures a été mesurée après 8 jours conformément à la norme DIN 53778 partie 2. Le tableau II indique les valeurs de lessivabilité, exprimée en cycles, en fonction de la nature de l'émulsion polymère aqueuse utilisée.

**Tableau II**

| Exemple | 7 | 8 | 9 | 10 | 11 | 12 |
|---|---|---|---|---|---|---|
| Emulsion polymère aqueuse de l'exemple | 1 | 2 | 3 | 4 | 5 | 6 |
| L | 200 | 800 | 760 | 510 | 300 | 260 |

Les exemples 7, 11 et 12, de lessivabilité médiocre, sont fournis à titre comparatif.

Par ailleurs l'aptitude de ces peintures à la formation d'un film à 5°C a été évaluée de la manière suivante : la formulation de peinture encore à l'état humide est appliquée sur une plaque de verre à une épaisseur de 300 µm. La plaque est ensuite stockée à 5°C à 70 % d'humidité relative pendant 18 heures afin que la formation du film de peinture s'opère dans des conditions extrêmes d'utilisation. Une heure après le retour à la température ambiante (20°C), on observe visuellement la présence ou non de craquelures.

Les peintures des exemples 8 à 10 présentent une bonne aptitude à la formation de film à 5°C, caractérisée par l'absence de craquelures.

### EXEMPLES 13 à 15

Les dispersions aqueuses de polymère des exemples 1 à 6 ont été formulées dans des compositions de peinture semi-mate comprenant :
- eau 150 parties
- agent dispersant commercialisé par HOECHST sous la marque DISPEX N 40 3 parties
- agent mouillant et dispersant commercialisé par MUNZING sous la marque AGITAN 281 3 parties
- biocide commercialisé par RIEDEL DE HAAN sous la marque MERGAL K 10 1 partie
- agent épaississant commercialisé par AQUALON sous la marque CULMINAL HEC 30 000 3 parties
- dioxyde de titane commercialisé par KRONOS sous l'appellation KRONOS 2063 200 parties
- carbonate de calcium commercialisé par OMYA sous la marque HYDROCARB 175 parties
- agent neutralisant (solution aqueuse de soude à 25 %) 1 partie
- émulsion aqueuse de polymère 350 parties

La réflexion de la lumière pour ces peintures est déterminée selon la norme DIN 53778 (partie 1) sous deux angles différents : 20° (R₂₀) et 60° (R₆₀). Les valeurs correspondantes, exprimées en pourcentage, sont indiquées dans le tableau III en fonction de la nature de l'émulsion polymère aqueuse utilisée.

**Tableau III**

| Exemple | 13 | 14 | 15 |
|---|---|---|---|
| Emulsion polymère aqueuse exemple | 2 | 3 | 4 |
| R20 | 1,4 | 1,0 | 2,0 |
| R₆₀ | 8,8 | 9,2 | 9,4 |

Par ailleurs l'aptitude de ces peintures à la formation d'un film à 5°C a été évaluée selon la même méthode qu'aux exemples 7 à 12. Cette aptitude est bonne, caractérisée par l'absence de craquelures.

Enfin le collant superficiel est évalué par l'aptitude au décollement de deux films de peinture à l'état humide (de format 25 X 25 mm et d'épaisseur 300 µm) mis au contact, après séchage pendant 24 heures à 23°C à 50 % d'humidité relative, pendant 8 heures sous une charge de 1 kg.

Pour chacun des exemples 13 à 15, on note une absence totale d'accrochage entre les deux éprouvettes.

### EXEMPLE 16

La dispersion polymère aqueuse de l'exemple 2 est formulée dans une composition de peinture semi-brillante comprenant :
- eau 150 parties
- agent mouillant et dispersant commercialisé par COATEX sous la dénomination P 90 2 parties
- agent épaississant commercialisé par AQUALON sous la dénomination NATROSOL 250 HR 5 parties
- solution aoueuse à 20 % de benzoate de sodium 10 parties
- solution aqueuse à 25 % d'hydroxyde de sodium comme agent neutralisant 2 parties
- dioxyde de titane commercialisé par TIOXIDE sous la dénomination TR92 250 parties
- agent épaississant commercialisé par COATEX sous la dénomination COAPUR 5035 16 parties
- émulsion polymère aqueuse 540 parties

L'aptitude de cette peinture à la formation d'un film à 5°C, ainsi que son collant superficiel, ont été évalués selon les méthodes décrites aux exemples précédents et ont été trouvés satisfaisants, à savoir :
- absence de craquelures lors de la formation de film à 5°C.
- absence totale d'accrochage entre les deux éprouvettes.

La réflexion de la lumière pour cette peinture est déterminée selon la norme DIN 53778 (partie 1) et trouvée égale à :
- 44,1 % sous un angle de 60°.
- 85 % sous un angle de 85°.

### EXEMPLES 17 et 18

Des émulsions sont préparées conformément au procédé décrit pour les exemples 1 à 6, à l'exception du fait que le styrène est remplacé par du méthacrylate de méthyle aussi bien dans la première étape que dans la seconde étape. L'exemple 18 est comparatif. Dépendant des valeurs de x, y, w, z et τ, on obtient les latex dont les caractéristiques, exprimées et déterminées comme aux exemples 1 à 6, sont indiquées dans le tableau IV ci-après.

**Tableau IV**

| Exemple | 17 | 18 |
|---|---|---|
| τ | 82 | 88 |
| x | 37 | 16,7 |
| y | 11,8 | 31,5 |
| w | 16,7 | 37 |
| z | 31,7 | 11,8 |
| TMS | 48,9 | 49,1 |
| TMP | 152 | 142 |
| VB | 2,0 | 1,9 |
| TMR | 45 | 30 |
| TMF | 0 | 0 |
| pH | 8,5 | 8,5 |
| Tg1 | -12 | + 38 |
| Tg2 | + 26 | - 10 |

### EXEMPLES 19 et 20

Les dispersions aqueuses de polymère (latex) des exemples 17 et 18 sont formulées dans des compositions de peinture mate strictement identiques à celles des exemples 7 à 12, sur lesquelles on mesure la lessivabilité L dans les conditions déjà décrites. Les valeurs de L sont indiquées dans le tableau V ci-après. L'exemple 20 est comparatif.

**Tableau V**

| Exemple | 19 | 20 |
|---|---|---|
| Emulsion polymère aqueuse exemple | 17 | 18 |
| L | 500 | 300 |

## Revendications

1. Dispersion aqueuse de polymère à particules structurées, destinée en particulier à la fabrication de peintures sans solvant, lesdites particules comprenant au moins un premier polymère et au moins un second polymère mutuellement incompatibles, caractérisée en ce que le premier polymère est non alcalino-soluble et non-réticulé, possède une température de transition vitreuse de -25° à + 0°C et représente de 40 à 65 % en poids des particules, le second polymère est non alcalino-soluble et non-réticulé, possède une température de transition vitreuse de 5° à 40°C et représente de 60 % à 35 % en poids des particules, en ce que la température de transition vitreuse du second polymère dépasse de moins de 40°C celle du premier polymère et en ce que la dimension moyenne des particules est comprise entre 100 et 300 nm.

2. Dispersion aqueuse selon la revendication 1, caractérisée en ce que le premier polymère et le second polymère sont préparés à partir d'au moins un monomère éthyléniquement insaturé choisi parmi les esters de l'acide acrylique ou de l'acide méthacrylique et les monomères vinylaromatiques.

3. Dispersion aqueuse selon l'une des revendications 1 et 2, caractérisée en ce que le premier polymère est formé à partir d'un mélange de 15 à 35 % en poids de styrène ou de méthacrylate de méthyle et de 65 à 85 % en poids d'acrylate de n-butyle, et le second polymère est formé à partir d'un mélange de 40 à 70 % en poids de styrène ou de méthacrylate de méthyle et de 30 à 60 % en poids d'acrylate de n-butyle.

4. Dispersion aqueuse selon l'une des revendications 2 à 3, caractérisée en ce que le premier polymère et/ou le second polymère comprend en outre jusqu'à 2 parties en poids d'au moins un comonomère hydrosoluble copolymérisable avec les monomères éthyléniquement insaturés pour 100 parties en poids desdits monomères.

5. Dispersion aqueuse selon la revendication 4, caractérisée en ce que ledit comonomère hydrosoluble est choisi parmi l'acide acrylique, l'acide méthacrylique, l'acrylamide et la méthacrylamide.

6. Dispersion aqueuse selon l'une des revendications 1 à 5, caractérisée en ce que la température de transition vitreuse du second polymère dépasse de plus de 20°C celle du premier polymère.

7. Procédé de fabrication d'une dispersion aqueuse selon l'une des revendications 1 à 6, comprenant une première étape de polymérisation en émulsion de monomères conduisant à la formation d'un premier polymère, suivie d'une seconde étape de polymérisation en émulsion de monomères conduisant a la formation d'un second polymère incompatible avec le premier, caractérisé en ce que :
- les monomères utilisés dans la première étape conduisent à la formation d'un premier polymère non alcalino-soluble et non-réticulé ayant une température de transition vitreuse de - 25°C à + 0°C,
- les monomères utilisés dans la seconde étape conduisent à la formation d'un second polymère non alcalino-soluble et non-réticulé ayant une température de transition vitreuse de 5°C à 40°C et dépassant de moins de 40°C la température de transition vitreuse du premier polymère,
- les quantités de monomères engagés dans la première étape et dans la seconde étape sont telles que le premier polymère représente de 40 % à 65 % en poids des particules de la dispersion tandis que le second polymère représente de 60 % à 35 % en poids des particules de la dispersion, et
- les conditions de polymérisation en émulsion de la première étape et de la seconde étape sont telles que la dimension moyenne des particules est comprise entre 100 et 300 nm.

8. Procédé de fabrication de dispersion aqueuse selon la revendication 7, caractérisé. en ce que l'addition et la polymérisation des monomères dans la seconde étape commencent alors que la composition de monomères de la première étape n'est qu'au plus à 90 % de taux de conversion.

9. Procédé de fabrication de dispersion aqueuse selon l'une des revendications 7 et 8, caractérisé en ce que la polymérisation est effectuée en présence de jusqu'à 1 partie en poids, pour 100 parties en poids des monomères, d'au moins un agent de transfert de chaîne.

10. Procédé de fabrication de dispersion aqueuse selon l'une des revendications 7 à 9, caractérisé en ce que dans la première étape on effectue un ensemencement tel que 80 à 98 % en poids des monomères utilisés dans la première étape sont ajoutés dans un milieu réactionnel contenant déjà une pré-émulsion partiellement polymérisée de 2 à 20 % en poids desdits monomères et en ce que la taille moyenne des particules de polymère présentes dans ladite pré-émulsion partiellement polymérisée ne dépasse pas 95 nanomètres.

11. Procédé de fabrication de dispersion aqueuse selon la revendication 10, caractérisé en ce que la durée de polymérisation du flux de pré-émulsion partielle ne dépasse pas 45 minutes.

12. Procédé de fabrication de dispersion aqueuse selon l'une des revendications 7 à 11, caractérisé en ce qu'elle est préparée en présence d'une combinaison d'un tensio-actif non-ionique et d'un tensio-actif anionique.

13. Procédé de fabrication de dispersion aqueuse selon l'une des revendications 7 à 12, caractérisé en ce qu'on effectue, après la seconde étape, un traitement au moyen d'un système d'initiation de radicaux libres ayant un court temps de demi-vie en vue d'atteindre un taux résiduel de monomères ne dépassant pas 50 ppm.

14. Composition de peinture sans plastifiant et sans agent de coalescence comprenant une dispersion aqueuse de polymère selon l'une des revendications 1 à 6 ou bien obtenue à partirt d'un procédé selon l'une des revendications 7 à 13.

## Claims

1. Aqueous polymer dispersion comprising structured particles which is intended in particular for the production of solventless paints, the said particles comprising at least one first polymer and at least one second polymer which are mutually incompatible, characterized in that the first polymer is not alkali-soluble and is non-crosslinked, has a glass transition temperature of from -25° to 0°C and represents from 40 to 65% by weight of the particles, the second polymer is not alkali-soluble and is non-crosslinked, has a glass transition temperature of from 5° to 40°C and represents from 60% to 35% by weight of the particles, in that the glass transition temperature of the second polymer exceeds that of the first polymer by less than 40°C, and in that the average particle size is between 100 and 300 nm.

2. Aqueous dispersion according to Claim 1, characterized in that the first polymer and the second polymer are prepared from at least one ethylenically unsaturated monomer which is chosen from among the esters of acrylic acid or methacrylic acid and aromatic vinyl monomers.

3. Aqueous dispersion according to one of Claims 1 and 2, characterized in that the first polymer is formed from a mixture of from 15 to 35% by weight of styrene or methyl methacrylate and from 65 to 85% by weight of n-butyl acrylate, and the second polymer is formed from a mixture of from 40 to 70% by weight of styrene or methyl methacrylate and from 30 to 60% by weight of n-butyl acrylate.

4. Aqueous dispersion according to one of Claims 2 and 3, characterized in that the first polymer and/or the second polymer additionally comprises up to 2 parts by weight of at least one water-soluble comonomer which is copolymerizable with the ethylenically unsaturated monomers, per 100 parts by weight of the said monomers.

5. Aqueous dispersion according to Claim 4, characterized in that the said water-soluble comonomer is chosen from acrylic acid, methacrylic acid, acrylamide and methacrylamide.

6. Aqueous dispersion according to one of Claims 1 to 5, characterized in that the glass transition temperature of the second polymer exceeds that of the first polymer by more than 20°C.

7. Process for the production of an aqueous dispersion according to one of Claims 1 to 6, comprising a first step of emulsion polymerization of monomers leading to the formation of a first polymer, followed by a second step of emulsion polymerization of monomers, leading to the formation of a second polymer which is incompatible with the first, characterized in that:
- the monomers used in the first step lead to the formation of a first, alkali-insoluble and non-crosslinked polymer which has a glass transition temperature of from -25°C to 0°C,
- the monomers used in the second step lead to the formation of a second, non-crosslinked polymer which is not alkali-soluble, having a glass transition temperature which is from 5°C to 40°C and exceeds the glass transition temperature of the first polymer by less than 40°C,
- the quantities of monomers employed in the first step and in the second step are such that the first polymer represents from 40% to 65% by weight of the particles of dispersion, while the second polymer represents from 60% to 35% by weight of the particles of the dispersion, and
- the emulsion polymerization conditions in the first step and in the second step are such that the average particle size is between 100 and 300 nm.

8. Process for the preparation of an aqueous dispersion according to Claim 7, characterized in that the addition and the polymerization of the monomers in the second step commence when the composition of monomers of the first step is at a degree of conversion of no more than 90%.

9. Process for the preparation of an aqueous dispersion according to one of Claims 7 and 8, characterized in that the polymerization is carried out in the presence of up to 1 part by weight, per 100 parts by weight of the monomers, of at least one chain transfer agent.

10. Process for the preparation of an aqueous dispersion according to one of Claims 7 to 9, characterized in that, in the first step, seeding is carried out such that from 80 to 98% by weight of the monomers used in the first step are added to a reaction medium which already contains a partially polymerized pre-emulsion of from 2 to 20% by weight of the said monomers, and in that the average size of the polymer particles present in the said partially polymerized preemulsion does not exceed 95 nanometers.

11. Process for the preparation of an aqueous dispersion according to Claim 10, characterized in that the polymerization time of the flux of partial pre-emulsion does not exceed 45 minutes.

12. Process for the preparation of an aqueous dispersion according to one of Claims 7 to 11, characterized in that it is prepared in the presence of a combination of a nonionic surfactant and an anionic surfactant.

13. Process for the preparation of an aqueous dispersion according to one of Claims 7 to 12, characterized in that, after the second step, a treatment is carried out by means of a free-radical initiation system having a short half-life, in order to attain a residual monomer content which does not exceed 50 ppm.

14. Paint composition which is free of plasticizer and coalescence agent, comprising an aqueous polymer dispersion according to one of Claims 1 to 6 or else obtained by a process according to one of Claims 7 to 13.

## Patentansprüche

1. Wäßrige Dispersion eines Polymers aus strukturierten Teilchen, insbesondere zur Herstellung von lösungsmittelfreien Lacken, wobei die Teilchen mindestens ein erstes Polymer und mindestens ein zweites Polymer, die miteinander unverträglich sind, enthalten, dadurch gekennzeichnet, daß das erste Polymer alkaliunlöslich und unvernetzt ist, eine Glasübergangstemperatur von -25°C bis +0°C aufweist und 40 bis 65 Gew.-% der Teilchen ausmacht, das zweite Polymer alkaliunlöslich und unvernetzt ist, eine Glasübergangstemperatur von 5°C bis 40°C aufweist und 60 bis 35 Gew.-% der Teilchen ausmacht, die Glasübergangstemperatur des zweiten Polymers um mindestens 40°C über der des ersten Polymers liegt und die mittlere Größe der Teilchen zwischen 100 und 300 nm liegt.

2. Wäßrige Dispersion nach Anspruch 1, dadurch gekennzeichnet, daß das erste Polymer und das zweite Polymer ausgehend von mindestens einem ethylenisch ungesättigten Monomer, ausgewählt unter Acrylsäure- oder Methacrylsäureestern und vinylaromatischen Monomeren, hergestellt werden.

3. Wäßrige Dispersion nach Anspruch 1 oder 2, dadurch gekennzeichnet, daß das erste Polymer ausgehend von einer Mischung aus 15 bis 35 Gew.-% Styrol oder Methylmethacrylat und 65 bis 85 Gew.-% n-Butylacrylat und das zweite Polymer ausgehend von einer Mischung aus 40 bis 70 Gew.-% Styrol oder Methylmethacrylat und 30 bis 60 Gew.-% n-Butylacr.ylat hergestellt wird.

4. Wäßrige Dispersion nach Anspruch 2 oder 3, dadurch gekennzeichnet, daß das erste Polymer und/oder das zweite Polymer außerdem auch noch bis zu 2 Gewichtsteile mindestens eines wasserlöslichen, mit den ethylenisch ungesättigten Monomeren copolymerisierbaren Comonomers, bezogen auf 100 Gewichtsteile der Monomere, enthalten bzw. enthält.

5. Wäßrige Dispersion nach Anspruch 4, dadurch gekennzeichnet, daß das wasserlösliche Comonomer unter Acrylsäure, Methacrylsäure, Acrylamid und Methacrylamid ausgewählt wird.

6. Wäßrige Dispersion nach einem der Ansprüche 1 bis 5, dadurch gekennzeichnet, daß die Glasübergangstemperatur des zweiten Polymers um mindestens 20°C über der des ersten Polymers liegt.

7. Verfahren zur Herstellung einer wäßrigen Dispersion nach einem der Ansprüche 1 bis 6, bei dem man in einem ersten Schritt Monomere zu einem ersten Polymer emulsionspolymerisiert und dann in einem zweiten Schritt Monomere zu einem zweiten, mit dem ersten Polymer unverträglichen Polymer emulsionspolymerisiert, dadurch gekennzeichnet, daß man:
- in dem ersten Schritt Monomere einsetzt, die zur Bildung eines alkaliunlöslichen und unvernetzten ersten Polymers, dessen Glasübergangstemperatur -25°C bis +0°C beträgt, führen,
- in dem zweiten Schritt Monomere einsetzt, die zur Bildung eines alkaliunlöslichen und unvernetzten zweiten Polymers, dessen Glasübergangstemperatur 5°C bis 40°C beträgt und um mindestens 40°C über der des ersten Polymers liegt, führen,
- die Monomermengen in dem ersten Schritt und in dem zweiten Schritt so bemißt, daß das erste Polymer 40 bis 65 Gew.-% der Teilchen der Dispersion und das zweite Polymer 60 bis 35 Gew.-% der Teilchen der Dispersion ausmacht, und
- die Emulsionspolymerisationsbedingungen in dem ersten Schritt und in dem zweiten Schritt so wählt, daß die mittlere Größe der Teilchen zwischen 100 und 300 nm liegt.

8. Verfahren zur Herstellung einer wäßrigen Dispersion nach Anspruch 7, dadurch gekennzeichnet, daß man mit der Zugabe und Polymerisation der Monomere in dem zweiten Schritt bei einem Umsatz der Monomerenzusammensetzung des ersten Schritts von höchstens 90% beginnt.

9. Verfahren zur Herstellung einer wäßrigen Dispersion nach Anspruch 7 oder 8, dadurch gekennzeichnet, daß man die Polymerisation in Gegenwart von bis zu 1 Gewichtsteil mindestens eines Kettenübertragungsmittels, bezogen auf 100 Gewichtsteile der Monomere, durchführt.

10. Verfahren zur Herstellung einer wäßrigen Dispersion nach einem der Ansprüche 7 bis 9, dadurch gekennzeichnet, daß man in dem ersten Schritt einen Saatzusatz vornimmt, wobei man 80 bis 98 Gew.-% der in dem ersten Schritt eingesetzten Monomere zu einem Reaktionsmedium gibt, das bereits eine teilweise polymerisierte Voremulsion aus 2 bis 20 Gew.-% der Monomere enthält, und die mittlere Größe der in dieser teilweise polymerisierten Voremulsion vorliegenden Polymerteilchen nicht mehr als 95 Nanometer beträgt.

11. Verfahren zur Herstellung einer wäßrigen Dispersion nach Anspruch 10, dadurch gekennzeichnet, daß man die Teilpolymerisation des Voremulsionsstroms über einen Zeitraum von höchstens 45 Minuten durchführt.

12. Verfahren zur Herstellung einer wäßrigen Dispersion nach einem der Ansprüche 7 bis 11, dadurch gekennzeichnet, daß man sie in Gegenwart einer Kombination aus einem nichtionischen Tensid und einem anionischen Tensid vornimmt.

13. Verfahren zur Herstellung einer wäßrigen Dispersion nach einem der Ansprüche 7 bis 12, dadurch gekennzeichnet, daß man nach dem zweiten Schritt zur Erzielung eines Restmonomerengehalts von höchstens 50 ppm eine Behandlung mit einem radikalischen Initiatorsystem mit kurzer Halbwertszeit durchführt.

14. Weichmacher- und koaleszenzmittelfreie Lackzusammensetzung, enthaltend eine wäßrige Polymerdispersion nach einem der Ansprüche 1 bis 6 oder eine nach einem Verfahren nach einem der Ansprüche 7 bis 13 hergestellte wäßrige Polymerdispersion.
